# EUROPEAN PATENT APPLICATION

(11) **EP 3 808 793 A1**
(43) Date of publication of application: **21.04.2021**
(21) Application number: 19203178.9
(22) Date of filing: 15.10.2019
(51) Int. Cl.: C08G 77/18, C08G 77/26, C08L 83/04, C08L 83/08, C09D 183/04, C09D 183/08, C09J 183/04, C09J 183/08

(54) **ONE-COMPONENT MOISTURE-CURABLE SILICONE COMPOSITIONS**

(71) Applicant: Henkel AG & Co. KGaA, 40589 Düsseldorf (DE)
(72) Inventor: Patel, Mihirkumar, 411057 Pune (IN); Nandanwar, Nivedita, 440034 Nagpur (IN); Shah, Jayesh P, 411001 Pune (IN)

(57) **Abstract**

The present invention is directed to a one-component (1K) moisture curable composition comprising: (a) at least one polyorganosiloxane which has at least one alkoxy group bound to a silicon atom, (b) at least one alkoxy-containing aminofunctional silicone resin, (c) at least one adhesion promoter different from said alkoxy-containing aminofunctional silicone resin (b), and (d) at least one curing catalyst. The invention also relates to coatings, sealants, or adhesives comprising said composition, cured products obtained from said composition, use of the composition.

## Description

The present invention relates to a one-component (1K) moisture-curable compositions comprising at least one polyorganosiloxane which has at least one alkoxy group bound to a silicon atom, at least one alkoxy-containing aminofunctional silicone resin, at least one adhesion promoter different from said alkoxy-containing aminofunctional silicone resin, and at least one curing catalyst. These compositions have improved curing speed, mechanical and adhesion properties and excellent storage stability. The invention also relates to coatings, sealants, or adhesives comprising said composition, cured products obtained from said composition, use of the composition.

Polymer systems which possess reactive crosslinkable silyl groups, for example alkoxysilyl groups, have long been known. In the presence of atmospheric moisture these alkoxysilane-terminated polymers are able to condense with elimination of the alkoxy groups. Depending on the amount of alkoxysilane groups and their structure, mainly long-chain polymers (thermoplastics), relatively wide-meshed three-dimensional networks (elastomers) or highly crosslinked systems (thermosets) form.

In particular, silicone polymers such as polyorganosiloxanes have great importance in the production of adhesive, sealing, coating, and insulation materials. Among these, those that vulcanize at low temperatures and under ambient conditions constitute a significant share of the market. Typical formulations contain a reactive polyorganosiloxane, a crosslinker, and a condensation catalyst. It is typically used in combination with a silane-based crosslinker which has hydrolysable groups bound to the silicon atom.

Various silicone systems, for example acetoxy or oxime system, for fast cure are available in the market. However, acetoxy system has limited applications due to the strong smell and its corrosive nature of acetic acid. Oxime system has disadvantages that the released oximes have an intense and foul odor and are hazardous for human health.

Alkoxy systems are considered safe as they release neutral molecules of alcohol, such as MeOH and EtOH. Alkoxy systems nevertheless have the disadvantages of slow curing and relatively poor storage stability and the cured products exhibit poor adhesion to some materials. Above-mentioned problems of the alkoxy systems have been partially addressed by loading high amount of catalyst or using a two-component (2K) system. However, there is still an increasing demand for fast curing one-component (1K) silicone system.

It is therefore an object of the present invention to provide one-component (1K) silicone system which overcomes at least some of the known disadvantages.

In accordance with a first aspect of the present invention, there is provided a one-component moisture curable composition comprising:
(a) at least one polyorganosiloxane which has at least one alkoxy group bound to a silicon atom,
(b) at least one alkoxy-containing aminofunctional silicone resin,
(c) at least one adhesion promoter different from said alkoxy-containing aminofunctional silicone resin (b), and
(d) at least one curing catalyst.

The combination of the polyorganosiloxane having at least one alkoxy group bound to a silicon atom and the alkoxy-containing aminofunctional silicone resin makes uniform cross-linked network system resulting info faster deep section curing and improved mechanical and physical properties of cured product.

In accordance with a second aspect of the present invention, there is provided a coating, sealant, or adhesive comprising the one-component moisture curable composition as defined herein.

The present invention is further directed to a cured product obtained from the one-component moisture curable composition as defined herein.

Yet a further aspect of the present invention is directed to the use of the one-component moisture curable composition as defined herein.

### Definitions

As used herein, the singular forms *"a", "an"* and *"the"* include plural referents unless the context clearly dictates otherwise.

The term *"at least one,"* as used herein, means 1 or more, i.e., 1, 2, 3, 4, 5, 6, 7, 8, 9, or more. With reference to an ingredient, the indication refers to the type of ingredient and not to the absolute number of molecules. "*At least one polymer"* thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms *"comprising", "comprises"* and *"comprised* of" as used herein are synonymous with *"including", "includes", "containing"* or *"contains",* and are inclusive or open-ended and do not exclude additional, non-recited members, elements or method steps. If used, the phrase *"consisting of"* is closed and excludes all additional elements. Further, the phrase *"consisting essentially of"* excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term *"about",* as used herein in connection with a numerical value, relates to a variance of ±20%, preferably ±10% of the respective value.

The words *"preferred", "preferably", "desirably"* and *"particularly",* and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein, the term *"equivalent (eq.")* relates, as is usual in chemical notation, to the relative number of reactive groups present in the reaction.

The term *"equivalent weight"* as used herein refers to the molecular weight divided by the number of a function concerned. The *"amine hydrogen equivalent weight"* (AHEW) is the weight of the organic amine, in grams, that contains one amine hydrogen.

As used herein, the term *"(co)polymer"* includes homopolymers, copolymers, block copolymers and terpolymers.

As used herein, *"C₁-Cₙ alkyl"* group refers to a monovalent group that contains 1 to n carbons atoms, that is a radical of an alkane and includes straight-chain and branched organic groups. As such, a *"C₁*-*C₃₀ alkyl"* group refers to a monovalent group that contains from 1 to 30 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-18 carbon atoms (C₁-C₁₈ alkyl) - for example unsubstituted alkyl groups containing from 1 to 12 carbon atoms (C₁-C₁₂ alkyl) or from 1 to 6 carbon atoms (C₁-C₆ alkyl) - should be noted.

The term "C₃ *-Cₙ cycloalkyl"* is understood to mean a saturated, mono-, bi- or tricyclic hydrocarbon group having from 3 to n carbon atoms. In general, a preference for cycloalkyl groups containing from 3-18 carbon atoms (C₃-C₁₈ cycloalkyl groups) should be noted. Examples of cycloalkyl groups include: cyclopropyl; cyclobutyl; cyclopentyl; cyclohexyl; cycloheptyl; cyclooctyl; adamantane; and, norbornane.

As used herein, an *"C₆-C₁₈ aryl"* group used alone or as part of a larger moiety - as in *"aralkyl group" -* refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include: phenyl; indenyl; naphthalenyl, tetrahydronaphthyl, tetrahydroindenyl; tetrahydroanthracenyl; and, anthracenyl. And a preference for phenyl groups may be noted.

The term *"hetero"* as used herein refers to groups or moieties containing one or more heteroatoms, such as N, O, Si and S. Thus, for example "heterocyclic" refers to cyclic groups having, for example, N, O, Si or S as part of the ring structure. "*Heteroalkyf*" and "*heterocycloalkyf*" moieties are alkyl and cycloalkyl groups as defined hereinabove, respectively, containing N, O, Si or S as part of their structure.

Where *"amine number"* is mentioned herein, this is determinable by titration of the amine acetate ion by dilute, typically 1N HCl solution. For a pure material, the amine number can be calculated using the molecular weights of the pure compound and KOH (56.1 g/mol).

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

The term *"polyol"* as used herein shall include diols and higher functionality hydroxyl compounds.

The molecular weights referred to in this specification can be measured with gel permeation chromatography (GPC) using polystyrene calibration standards according to ASTM 3536.

### (a) Polyorganosiloxane

The one-component moisture curable composition according to the present invention comprises (a) at least one polyorganosiloxane which has at least one alkoxy group bound to a silicon atom.

In preferred embodiments, the polyorganosiloxane (a) is a polydiorganosiloxane, more preferably a polydiorganosiloxane having at least one alkyl group and/or at least one aryl group. The alkyl group may be selected from a C₁-C₂₀ alkyl group, preferably a C₁-C₈ alkyl group, in particular is a methyl group. The aryl group may be selected from a C₆-C₁₈ aryl group, in particular is a phenyl group. In particularly preferred embodiments, the polyorganosilxoane (a) is a polydimethylsiloxane.

The polyorganosiloxane (a) has at least one, preferably at least two, alkoxy group(s) bound to a silicon atom. The alkoxy group may be selected from a C₁-C₈ alkoxy group, preferably a methoxy or ethoxy group, more preferably a methoxy group. In particularly preferred embodiments, the polyorganosiloxane (a) has two alkoxy terminal groups.

In preferred embodiments, the polyorganosiloxane (a) is dialkoxyalkyl polydiorganosiloxane, more preferably dimethoxymethyl polydiorganosiloxane.

The polyorganosiloxane (a) may have a kinematic viscosity of from 5,000 to 50,000 mPas at 25°C, preferably from 8,000 to 20,000 mPas at 25°C. Mixtures comprising polydiorganosiloxanes having different viscosities may also be used.

The quantity of the polyorganosiloxane (a) in the curable composition described herein may be from 40 to 90 % by weight, preferably 60 to 85 % by weight, more preferably 70 to 85 % by weight, relative to the total weight of the composition.

### (b) Alkoxy-containing aminofunctional silicone resin

The one-component moisture curable composition according to the present invention comprises (b) at least one alkoxy-containing aminofunctional silicone resin.

The alkoxy-containing aminofunctional silicone resin can be characterized by at least one of:
i) an amine hydrogen equivalent weight of from 80 or from 100 to 1500 g/eq., preferably from 150 to 700 g/eq. for example from 200 to 500 g/eq; and,
ii) a weight average molecular weight (Mw), determined by gel permeation chromatography, of from 150 to 10,000 g/mol, preferably from 150 to 8,000 g/mol, for example from 150 to 5,000 g/mol.

In an important embodiment of the present invention, the composition comprises at least one alkoxy-containing aminofunctional silicone resin having at least two amine hydrogen atoms per molecule, having an amine hydrogen equivalent weight of from 100 to 1500 g/eq. and having a total alkoxy content (AC) of from 10 to 40 mole percent based on the number of moles of silicon, said resin comprising the units:

(R₃Si(OR')_{w}O_{(1-w)/2})ₐ (i);

(R₂Si(OR')ₓO_{(2-x)/2})_{b} (ii);

(RSi(OR')_{y}O_{(3-y)/2})_{c} (iii);

and,

(Si(OR')_{z}O_{(4-z)/2})_{d} (iv)

wherein: each R is independently selected from a C₁-C₁₈ alkyl group, a C₆-C₁₈ aryl group, or an aminofunctional hydrocarbon group having the formula -R²NHR³ or -R²NHR²NHR³ of which each R² is independently a C₂-C₂₀ alkylene group and R³ is a C₁-C₆ alkyl group;
a, b, c, and d define the mole fractions of each unit (i) to (iv) respectively, such that a+b+c+d=1; and, w, x, y, and z define the mole fractions of alkoxy groups such that 0 ≤ w < 1, 0 ≤ x < 2, 0 ≤ y < 3, and, 0 ≤ z < 4 and are selected to meet the above defined total alkoxy content (AC).

In preferred embodiments, each R is independently selected from a C₁-C₁₂ alkyl group, a C₆-C₁₈ aryl group or aminofunctional hydrocarbon group having the formula -R²NHR³ or -R²NHR²NHR³ of which each R² is independently a C₂-C₁₂ alkylene group and R³ is a C₁-C₄ alkyl group.

In particularly preferred embodiments, each R is independently selected from a C₁-C₆ alkyl group, a C₆-C₁₈ aryl group or aminofunctional hydrocarbon group having the formula -R²NHR³ or -R²NHR²NHR³ of which each R² is independently a C₂-C₈ alkylene group and R³ is a C₁₋C₂ alkyl group. A definitive preference may be mentioned for aminofunctional silicone resins (b) having both methyl and phenyl substitution at R.

As noted, subscripts a, b, c, and d in the aminofunctional silicone resin (b) formulated above describe the mole fractions of each unit, such that a+b+c+d=1. In important embodiments, those mole fractions should meet the following conditions: i) a has a value of from 0 to 0.40, preferably from 0 to 0.20, for example from 0 to 0.10; ii) b has a value of ≥ 0.15, preferably a value of from 0.15 to 0.8, for example from 0.15 to 0.6; iii) c meets the condition 0 < c < 0.85 and preferably 0 < c < 0.80; and, iv) d has a value of from 0 to 0.20, preferably from 0 to 0.10, for example from 0 to 0.05.

The skilled artisan will recognize that the total alkoxy content (AC) of the alkoxy-containing aminofunctional silicone resin (b) as formulated above is represented by the sum of (wa) + (xb) + (yc) + (zd). Desirably, the total alkoxy content should be within the range of from 10 to 30 mole percent based on the number of moles of silicon in the resin and preferably in the range of from 10 to 25 mole percent or from 10 to 20 mole percent on that basis.

There is no intention to limit the methods by which the alkoxy-containing aminofunctional silicone resins (b) defined herein above can be prepared. The disclosure of US2012/0251729 (Horstman et al.) is however instructive on exemplary synthetic processes.

Without intention to limit the present invention, the following commercial alkoxy-containing aminofunctional silicone resins may be useful: Silquest A-1130, Silquest A-1387, Silquest Y-19139, Silquest VX 225 and Silquest Y-15744, available from Momentive Performance Materials Inc; and, HP1000 and HP2000 available from Wacker Chemie AG.

In preferred embodiments, the quantity of the alkoxy-containing aminofunctional silicone resin (b) in the curable composition described herein is from 0.1 to 10 % by weight, preferably 0.5 to 5 % by weight, more preferably 1 to 3 % by weight, relative to the total weight of the composition.

Whilst it is preferred that the moisture-curable composition according to the present invention comprises said alkoxy-containing aminofunctional silicone(s), the presence of other curing agents in an amount up to 10 mol.%, based on the total moles of said alkoxy-containing aminofunctional silicone(s) is not precluded by the present invention.

### (c) Adhesion promoter

The one-component moisture curable composition according to the present invention comprises (c) at least one adhesion promoter different from said alkoxy-containing aminofunctional silicone resin (b).

Suitable as adhesion promoters are, silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In preferred embodiments, the at least one adhesion promoter (c) comprises a compound selected from aminosilanes, preferably is selected from the group consisting of 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3- aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3- aminopropylmethyldimethoxysilane, 3-(N-phenylamino)propyltrimethoxysilane, 3- piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)- propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3- trimethoxysilyl)propylamine, bis(3-triethoxysilyl)propylamin, 4-amino-3,3-dimethylbutyltrimethoxy silane and 4-amino-3,3-dimetylbuthyltriethoxy silane, and mixtures thereof, particularly preferably of 3- aminopropyltrimethoxysilane, 3-aminopropyltriethoxysilane, aminomethyltrimethoxysilane, aminomethyltriethoxysilane, 3-(N,N-dimethylamino)propyltrimethoxysilane, 3-(N,Ndimethylamino)propyltriethoxysilane, (N,N-dimethylamino)methyltrimethoxysilane, (N,Ndimethylamino)methyltriethoxysilane, 3-(N,N-diethylamino)propyltrimethoxysilane, 3-(N,Ndiethylamino)propyltriethoxysilane, (N,N-diethylamino)methyltrimethoxysilane, (N,Ndiethylamino)methyltriethoxysilane, bis(3-trimethoxysilyl)propylamine, bis(3-triethoxysilyl)propylamine, 4-amino-3,3-dimethylbutyltrimethoxy silane and 4-amino-3,3-dimetylbuthyltriethoxy silane.

In preferred embodiments, the quantity of the adhesion promoter (c) in the curable composition described herein is from 0.1 to 5 % by weight, preferably 0.2 to 2 % by weight, more preferably 0.5 to 1 % by weight, relative to the total weight of the composition.

### (d) Curing catalyst

The one-component moisture curable composition according to the present invention comprises (d) at least one curing catalyst.

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, dioctyltin dineodecanoate, dimethyltin dineodecanoate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate, di-n-octyltin dilaurate, dioctyltin dineodecanoate, dimethyltin dineodecanoate and mixtures thereof.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(ORZ)₄,

where R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

where R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates can be used, for example.

Halogenated zirconium catalysts can also be used.

Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

In important embodiments, the curing catalyst is selected from tin compounds, preferably organotin compounds, more preferably selected from the group consisting of 1 ,3-dicarbonyl compounds of bivalent or tetravalent tin, dialyltin(IV) dicarboxylates, dialkyltin(IV) dialkoxylates, dialkyltin(IV) oxides, tin(II) carboxylates, and mixtures thereof.

In preferred embodiments, the quantity of the curing catalyst (d) in the curable composition described herein is from 0.05 to 2 % by weight, preferably 0.1 to 1.5 % by weight, more preferably 0.1 to 1 % by weight, relative to the total weight of the composition. If a mixture of different catalysts is used, the amounts refer to the total amount in the composition.

### (e) Silane of the general formula (1)

The one-component moisture curable composition according to the present invention may further comprise at least one silane of the general formula (1):

Si(R¹)ₖ(Y)₄₋ₖ (1),

wherein
each R¹ is independently selected from an aliphatic or aromatic hydrocarbon group containing 1 to 20 C atoms, a vinyl group or a hydrogen atom;
each Y is independently selected from a hydroxyl group or an alkoxy group;
k is 0, 1, 2, or 3, preferably 1.

In preferred embodiments, Y in the general formula (1) is selected from an alkoxy group, more preferably from a C₁-C₈ alkoxy group, most preferably a methoxy or ethoxy group, in particular a methoxy group.

In preferred embodiments, each R¹ in the general formula (1) is independently selected from an aliphatic hydrocarbon group containing 1 to 20 C atoms, more preferably from a C₁-C₁₂ alkyl group, in particular preferably C₁-C₈ alkyl group, most preferably a methyl group.

### Additives

The one-component moisture curable composition according to the present invention may further comprise any one or more additional ingredients selected from the group consisting of plasticizers, stabilizers, antioxidants, fillers, moisture scavengers, blocking agents, reactive diluents, drying agents, UV stabilizers, rheological aids, and solvents.

All compounds that can be mixed with the other components with a reduction in viscosity and have at least one group reactive with the polymer can be used as reactive diluents.

The viscosity of the reactive diluent is preferably less than 20,000 mPas, particularly preferably about 0.1 to 6,000 mPas, very particularly preferably 1 to 1,000 mPas (Brookfield RVT, 23°C, spindle 7, 10 rpm).

The following substances, for example, can be used as reactive diluents: polyalkylene glycols reacted with isocyanatosilanes (e.g., Synalox 100-50B, DOW), carbamatopropyltrimethoxysilane, alkyltrimethoxysilane, alkyltriethoxysilane, such as methyltrimethoxysilane, methyltriethoxysilane, and vinyltrimethoxysilane (XL 10, Wacker), vinyltriethoxysilane, phenyltrimethoxysilane, phenyltriethoxysilane, octyltrimethoxysilane, tetraethoxysilane, vinyldimethoxymethylsilane (XL12, Wacker), vinyltriethoxysilane (GF56, Wacker), vinyltriacetoxysilane (GF62, Wacker), isooctyltrimethoxysilane (IO Trimethoxy), isooctyltriethoxysilane (IO Triethoxy, Wacker), N-trimethoxysilylmethyl-O-methyl carbamate (XL63, Wacker), N-dimethoxy(methyl)silylmethyl-O-methyl carbamate (XL65, Wacker), hexadecyltrimethoxysilane, 3-octanoylthio-1-propyltriethoxysilane, and partial hydrolysates of said compounds.

Further, the following polymers from Kaneka Corp. can also be used as reactive diluents: MS S203H, MS S303H, MS SAT 010, and MS SAX 350.

Silane-modified polyethers which derive, e.g., from the reaction of isocyanatosilane with Synalox types can likewise be used.

Polymers that can be prepared from an organic framework by grafting with a vinylsilane or by reacting polyol, polyisocyanate, and alkoxysilane can be used, furthermore, as reactive diluents.

A polyol is understood to be a compound that may contain one or more OH groups in the molecule. The OH groups can be both primary and secondary.

Suitable aliphatic alcohols include, for example, ethylene glycol, propylene glycol, and higher glycols, as well as other polyfunctional alcohols. The polyols can contain in addition other functional groups such as. e.g., esters, carbonates, or amides.

To prepare the preferred reactive diluents, the corresponding polyol component is reacted in each case with an at least difunctional isocyanate. Any isocyanate having at least two isocyanate groups may basically be used as the at least difunctional isocyanate, but within the scope of the present invention, compounds with two to four isocyanate groups, particularly with two isocyanate groups, are generally preferred.

Preferably, the compound present as the reactive diluent has at least one alkoxysilyl group, whereby of the alkoxysilyl groups, the di- and trialkoxysilyl groups are preferred.

Suitable as polyisocyanates for the preparation of a reactive diluent are, for example, ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3 and -1,4 diisocyanate, bis(2-isocyanatoethyl) fumarate, as well as mixtures of two or more thereof, 1-isocyanato-3,3,5-trimethyl-5-isocyanatomethyl cyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), or the partially or completely hydrogenated cycloalkyl derivatives thereof, for example, completely hydrogenated MDI (H12-MDI), alkyl-substituted diphenylmethane diisocyanates, for example, mono-, di-, tri-, or tetraalkyl diphenylmethane diisocyanate and the partially or completely hydrogenated cycloalkyl derivatives thereof, 4,4'-diisocyanatophenyl perfluoroethane, phthalic acid bis-isocyanatoethyl ester, 1-chloromethylphenyl-2,4- or -2,6-diisocyanate, 1-bromomethylphenyl-2,4- or -2,6-diisocyanate, 3,3-bis-chloromethyl ether-4,4'-diphenyl diisocyanate, sulfur-containing diisocyanates, as can be obtained by reacting 2 mol of diisocyanate with 1 mol of thiodiglycol or dihydroxydihexyl sulfide, the di- and triisocyanates of dimer and trimer fatty acids, or mixtures of two or more of the aforesaid diisocyanates.

Trivalent or higher valent isocyanates, as can be obtained, for example, by oligomerization of diisocyanates, particularly by oligomerization of the aforesaid isocyanates, can also be used as polyisocyanates. Examples of such trivalent and higher-valent polyisocyanates are the triisocyanurates of HDI or IPDI or mixtures thereof or mixed triisocyanurates thereof, as well as polyphenylmethylene polyisocyanate, as can be obtained by phosgenation of aniline-formaldehyde condensation products.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C₄₋₁₆ alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C₁₋₄-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

In various embodiments, the plasticizer may be a polydimethylsiloxane different from (a).

In various embodiments, the curable composition comprises at least one plasticizer, for example a polydimethylsiloxane.

The curable compositions contain the plasticizer preferably in an amount of 1 to 50% by weight, preferably in an amount of 10 to 40% by weight, particularly preferably in an amount of 20 to 30% by weight, based in each case on the total weight of the composition. If a mixture of plasticizers is used, the amounts refer to the total amount of plasticizers in the composition.

Preferably, the curable composition contains at least one stabilizer, selected from antioxidants, UV stabilizers, and drying agents.

All conventional antioxidants may be used as antioxidants. They are preferably present up to about 7% by weight, particularly up to about 5% by weight.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation.

Isocyanates, for example, are suitable as drying agents.

Advantageously, however, silanes are used as drying agents. For example, vinylsilanes such as 3-vinylpropyltriethoxysilane, oxime silanes such as methyl-O,O',O"-butan-2-one-trioximosilane or O,O',O",O'''-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mₙ) of less than about 5,000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions generally contain about 0 to about 6% by weight of drying agent.

The composition described herein can additionally contain fillers. Suitable here are, for example, chalk, lime powder, precipitated and/or pyrogenic (fumed) silica, zeolites, bentonites, magnesium carbonate, diatomaceous earth, alumina, clay, tallow, titanium oxide, iron oxide, zinc oxide, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

The pyrogenic (fumed) and/or precipitated silica preferably have a BET surface area of 10 to 90 m²/g. When they are used, they do not cause any additional increase in the viscosity of the composition of the invention, but contribute to strengthening the cured composition.

It is likewise conceivable to use pyrogenic and/or precipitated silica with a higher BET surface area, advantageously with 100 to 250 m²/g, particularly 110 to 170 m²/g, as a filler. Because of the higher BET surface area, the same effect, e.g., strengthening of the cured preparation, can be achieved at a smaller weight proportion of silicic acid. Further substances can thus be used to improve the composition described herein in terms of other requirements.

Suitable further as fillers are hollow spheres having a mineral shell or a plastic shell. These can be, for example, hollow glass spheres which are obtainable commercially under the trade names Glass Bubbles®. Plastic-based hollow spheres, e.g., Expancel® or Dualite®, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e.g., hydrogenated castor oil, fatty acid amides, or swellable plastics such as PVC. In order to be readily squeezable out of a suitable dispensing device (e.g., a tube), such preparations possess a viscosity from 3,000 to 15,000, preferably 40,000 to 80,000 mPas, or even 50,000 to 60,000 mPas.

The fillers are preferably used in an amount of 1 to 80% by weight, particularly preferably 2 to 20% by weight, and very particularly preferably 5 to 15% by weight, based in each case on the total weight of the composition. Of course, mixtures of a number of fillers can also be used. In this case, the quantitative data naturally refer to the total amount of filler in the composition.

The one-component moisture curable composition according to the present invention comprises
i) the polyorganosiloxane (a) in an amount of from 40 to 90 % by weight, preferably 60 to 85 % by weight, more preferably 70 to 85 % by weight, relative to the total weight of the composition; and/or
ii) the alkoxy-containing aminofunctional silicone resin (b) in an amount of from 0.1 to 10 % by weight, preferably 0.5 to 5 % by weight, more preferably 1 to 3 % by weight, relative to the total weight of the composition; and/or
iii) the adhesion promoter (c) in an amount of from 0.1 to 5 % by weight, preferably 0.2 to 2 % by weight, more preferably 0.5 to 1 % by weight, relative to the total weight of the composition; and/or
iv) the curing catalyst (d) in an amount of from 0.05 to 2 % by weight, preferably 0.1 to 1.5 % by weight, more preferably 0.1 to 1 % by weight, relative to the total weight of the composition; and/or
v) the silane (e) in an amount of 0 to 10 % by weight, preferably 0.5 to 5 % by weight, more preferably 1 to 3 % by weight, relative to the total weight of the composition.

The preparation of the curable composition can take place by simple mixing of the polyorganosiloxane (a), the alkoxy-containing aminofunctional silicone resin (b), the adhesion promoter (c), the curing catalyst (d), the optional silane (e), and optionally the other ingredients. This can take place in suitable dispersing units, e.g., a high-speed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

A coating, sealant or adhesive comprising the one-component moisture curable composition according to the present invention can be prepared by mixing of the above-mentioned components and optionally additional ingredients.

A cured product can be obtained from the one-component moisture curable composition according to the present invention upon exposure to moisture. The obtained cured product exhibits improved mechanical and adhesion properties and excellent storage stability.

The compositions of the invention can be used as an adhesive or sealing or coating material. In particular, the composition can be used for the production of structural glazing, weather seal applications and for many industrial applications. The use as a sealant may be preferred.

The compositions are suitable, *inter alia,* for bonding plastics, metals, glass, ceramic, wood, wood-based materials, paper, paper-based materials, rubber, and textiles, for gluing floors, and for sealing building elements, windows, wall and floor coverings, and joints in general. In this case, the materials can be bonded to themselves or as desired to one another.

The following examples serve to explain the invention, but the invention is not limited thereto.

### Examples

One-component (1K) moisture-curable compositions were prepared as described in Table 1. The following commercial products were used in the Examples:
- HP2000: Amino functional alkoxy methyl phenyl siloxane resin having an amine number of 2.6-2.9, available from Wacker Chemie AG.
- Silquest A-1110: aminopropyl trimethoxysilane available from Momentive Performance Materials Inc.
- Fomrez UL-38: dioctyltin dineodecanoate available from Galata Chemicals

The following tests were performed in the Examples:
Tack-free Time: This was determined by applying the product at a wet layer thickness of 75 µm at 23°C and a relative humidity of 50%. The coating was considered tack free when fingerprints could no longer be observed after touching the surface with a clean and dry finger. The tack-free time was measured using a timing device. The remaining tests (elongation at break, tensile strength, lap shear, tear strength, hardness Shore A, bulk cure) were performed after curing at room temperature for 7 days.
Elongation at break and tensile strength: Tensile strength and elongation at break were determined according to ASTM D412. Dumbbell specimens (Die C) with the following dimensions were used: thickness 2 +/- 0.2 mm; bar width 25 +/- 0.5 mm; bar length approx. 33 mm; and total length 11.5 cm. The prepolymer mixture (formulation) was spread on an even surface forming a film with a thickness of 2 mm. The film was allowed to cure under normal conditions (23+/-2°C, relative humidity 50+/-5%) for 7 days, and then the dumbbell specimen was punched out. Three specimens were used for each determination. The test was carried out under normal conditions (23+/-2°C, relative humidity 50+/-5%) and the measurement was carried out after 7 days of curing. The test specimens have to be at the same temperature at which the measurement will take place. Before the measurement, the thickness of the test specimens is determined at least at three different positions, at the middle and at the extremes, with a caliper. The mean value is introduced in the measuring software. The test specimens are clamped into the tensile tester so that the longitudinal axis coincides with the mechanical axis of the tensile tester and comprises the largest possible surface of the rod heads, without clamping the middle bar. Then the dumbbell is stretched to <0.1 MPa with a rate of 50 mm/min. Then, the force-elongation curve is recorded with a line speed of 50 mm/min.
Lap Shear: The lap shear was determined according to ASTM D1002. Single-lap tests may be used for comparing and selecting adhesives or bonding processes for susceptibility to fatigue and environmental changes, but such comparisons must be made with great caution since different adhesives may respond differently in different joints. In this test, method covers the determination of the apparent shear strengths of adhesives for bonding metals when tested on a standard single-lap-joint specimen and under specified conditions of preparation and test. The recommended thickness of the sheets is 1.62 6 0.125 mm. The recommended length of overlap for most metals of 1.62 mm (0.064 in.) in thickness is 12.7 6 0.25 mm (0.5 6 0.01 in.). After preparing the test joints and curing them as per the recommendations, the specimens were placed in the grips of the testing machine so that the outer 25 mm (1 in.) of each end are in contact with the jaws and so that the long axis of the test specimen coincides with the direction of applied pull through the center line of the grip assembly. The loading was applied immediately to the specimen at the rate of 80 to 100 kg/cm² (1200 to 1400 psi) of the shear area per min. The load was continued to failure. This rate of loading was approximated by a free crosshead speed of 1.3 mm (0.05 in.)/min.
Tear Strength: The tear strength of cured samples was measured according to ASTM D624. The test measures the strength required to initiate a tear in a material. ASTM D624 describes multiple different types of sample shapes that can be tested in a standard universal testing machine (tensile testing machine). To measure the tear strength the cured material was cut into one of the tear shapes as per the specification (Molded test specimen sheets shall be 2.3 6 1.0 mm (0.09 6 0.04 in.) thick with the milling grain or flow direction clearly marked). The width of the specimen was measured and then the specimen was loaded the specimen into tensile grips. The test began by separating the tensile grips at a speed of 20 inches per minute. After sample broke (rupture) the test ended and the results were finally recorded to calculate the force required to tear the specimens.
Hardness Shore A: Shore A hardness was measured according to ISO 868.
Bulk cure: Bulk curing is the time taken for complete curing of formulation throughout the thickness (i.e. Top to bottom) and it was monitored as a function of time (visual inspection) up to 7 days.

**Table 1**

| Ingredients (g) | Example 1 | Example 2 | Example 3 | Comparative Example 1 |
|---|---|---|---|---|
| Dimethoxymethyl polydimethylsiloxane with a viscosity of 10,000 mPas at 25°C | 80.8 | 80.8 | 80.8 | 80.8 |
| Fe₂O₃ | 5 | 5 | 5 | 5 |
| Carbon Black | 5.8 | 5.8 | 5.8 | 5.8 |
| Cerium Octoate | 0.2 | 0.2 | 0.2 | 0.2 |
| Fumed silica | 4 | 4 | 4 | 4 |
| Methyl trimethoxysilane | 0 | 0.75 | 1.5 | 3 |
| HP 2000 | 3 | 2.25 | 1.5 | 0 |
| Silquest A-111 0 | 0.5 | 0.5 | 0.5 | 0.5 |
| hexamethyldisilazane | 0.2 | 0.2 | 0.2 | 0.2 |
| Fomrez UL-38 | 0.5 | 0.5 | 0.5 | 0.5 |
| | | | | |
| Tack free time (min) | 36 | 42 | 51 | 60 |
| Elongation at break % | 238 | 236 | 278 | 250 |
| Tensile Strength (Mpa) | 2.36 | 2.35 | 2.12 | 1.94 |
| Lap Shear (Mpa) | 1.88 | 1.76 | 2.02 | 1.44 |
| Tear Strength (N/mm) | 15.06 | 14.27 | 13.41 | 12.5 |
| Hardness Shore A | 33 | 31 | 31 | 25 |
| Bulk cure (Days) | < 7days | < 7days | < 7days | < 7days |

## Claims

1. A one-component moisture curable composition comprising
(a) at least one polyorganosiloxane which has at least one alkoxy group bound to a silicon atom,
(b) at least one alkoxy-containing aminofunctional silicone resin,
(c) at least one adhesion promoter different from said alkoxy-containing aminofunctional silicone resin (b), and
(d) at least one curing catalyst.

2. The one-component moisture curable composition according to claim 1, wherein the at least one polyorganosiloxane (a) is a polydiorganosiloxane.

3. The one-component moisture curable composition according to claim 1 or 2, wherein the alkoxy-containing aminofunctional silicone resin (b) is **characterized by** at least one of:
i) an amine hydrogen equivalent weight of from 80 to 1500 g/eq.; and,
ii) a weight average molecular weight (Mw), determined by gel permeation chromatography, of from 150 to 10,000 g/mol.

4. The one-component moisture curable composition according to any one of claims 1 to 3, the alkoxy-containing aminofunctional silicone resin has at least two amine hydrogen atoms per molecule, having an amine hydrogen equivalent weight of from 100 to 1500 g/eq. and having a total alkoxy content (AC) of from 10 to 40 mole percent based on the number of moles of silicon, said resin comprising the units:
(R₃Si(OR')_{w}O_{(1-w)/2})ₐ (i);
(R₂Si(OR')ₓO_{(2-x)/2})_{b} (ii);
(RSi(OR')_{y}O_{(3-y)/2})_{c} (iii);
and,
(Si(OR')_{z}O_{(4-z)/2})_{d} (iv)
wherein
each R is independently selected from a C₁-C₁₈ alkyl group, a C₆-C₁₈ aryl group, or an aminofunctional hydrocarbon group having the formula -R²NHR³ or -R²NHR²NHR³ of which each R² is independently a C₂-C₂₀ alkylene group and R³ is a C₁-C₆ alkyl group;
a, b, c, and d define the mole fractions of each unit (i) to (iv) respectively, such that a+b+c+d=1; and,
w, x, y, and z define the mole fractions of alkoxy groups such that 0 ≤ w < 1, 0 ≤ x < 2, 0 ≤ y < 3, and, 0 ≤ z < 4.

5. The one-component moisture curable composition according to claim 4, wherein each R in resin (b) is independently selected from a C₁-C₆ alkyl group, a C₆-C₁₈ aryl group or aminofunctional hydrocarbon group having the formula -R²NHR³ or -R²NHR²NHR³ of which each R² is independently a C₂-C₈ alkylene group and R³ is a C₁-C₂ alkyl group.

6. The one-component moisture curable composition according to claim 4 or 5, wherein the alkoxy-containing aminofunctional silicone resin (b) has both methyl and phenyl substitution at R.

7. The one-component moisture curable composition according to any one of claims 4 to 6, wherein a in the alkoxy-containing aminofunctional silicone resin (b) has a value of from 0 to 0.10, b has a value of from 0.15 to 0.6, c meets the condition 0 < c < 0.85 and d has a value of from 0 to 0.05.

8. The one-component moisture curable composition according to any one of claims 1 to 7, wherein the at least one adhesion promoter (c) comprises a compound selected from aminosilanes, preferably is selected from the group consisting of 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3- aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)- propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3- trimethoxysilyl)propylamine, bis(3-triethoxysilyl)propylamin, 4-amino-3,3-dimethylbutyltrimethoxy silane and 4-amino-3,3-dimetylbuthyltriethoxy silane, and mixtures thereof, particularly preferably of 3- aminopropyltrimethoxysilane, 3-aminopropyltriethoxysilane, aminomethyltrimethoxysilane, aminomethyltriethoxysilane, 3-(N,N-dimethylamino)propyltrimethoxysilane, 3-(N,Ndimethylamino)propyltriethoxysilane, (N,N-dimethylamino)methyltrimethoxysilane, (N,Ndimethylamino)methyltriethoxysilane, 3-(N,N-diethylamino)propyltrimethoxysilane, 3-(N,Ndiethylamino)propyltriethoxysilane, (N,N-diethylamino)methyltrimethoxysilane, (N,Ndiethylamino)methyltriethoxysilane, bis(3-trimethoxysilyl)propylamine, bis(3-triethoxysilyl)propylamine, 4-amino-3,3-dimethylbutyltrimethoxy silane and 4-amino-3,3-dimetylbuthyltriethoxy silane.

9. The one-component moisture curable composition according to any one of claims 1 to 8, wherein the at least one curing catalyst (d) is a tin compound, preferably an organotin compound, more preferably selected from the group consisting of 1,3-dicarbonyl compounds of bivalent or tetravalent tin, dialyltin(IV) dicarboxylates, dialkyltin(IV) dialkoxylates, dialkyltin(IV) oxides, tin(II) carboxylates, and mixtures thereof.

10. The one-component moisture curable composition according to any one of claims 1 to 9, further comprising (e) at least one silane of the general formula (1):
Si(R¹)ₖ(Y)₄₋ₖ (1),
wherein
each R¹ is independently selected from an aliphatic or aromatic hydrocarbon group containing 1 to 20 C atoms, a vinyl group or a hydrogen atom;
each Y is independently selected from a hydroxyl group or an alkoxy group;
k is 0, 1, 2, or 3, preferably 1.

11. The one-component moisture curable composition according to claim 10, wherein
i) Y in the general formula (1) is selected from a C₁-C₈ alkoxy group, preferably a methoxy or ethoxy group, more preferably a methoxy group; and/or
ii) R¹ in the general formula (1) is independently selected from an aliphatic hydrocarbon group containing 1 to 20 C atoms, preferably from a C₁-C₁₂ alkyl group.

12. The one-component moisture curable composition according to any one of claims 1 to 11, further comprising any one or more additional ingredients selected from the group consisting of plasticizers, stabilizers, antioxidants, fillers, moisture scavengers, blocking agents, reactive diluents, drying agents, UV stabilizers, rheological aids, and solvents.

13. A coating, sealant, or adhesive comprising the one-component moisture curable composition according to any one of claims 1 to 12.

14. A cured product obtained from the one-component moisture curable composition according to any one of claims 1 to 12.

15. Use of the one-component moisture curable composition according to any one of claims 1 to 12 as a coating, sealant or adhesive.
